# FASCICULE DE BREVET EUROPEEN

(11) **EP 2 582 546 B1**
(45) Date de publication et mention de la délivrance du brevet: **23.04.2014**
(21) Numéro de dépôt: 11726132.1
(22) Date de dépôt: 14.06.2011
(51) Int. Cl.: B60R 5/04, B60P 3/36, B60N 3/00, B60T 7/02, B60P 3/38, B60P 3/39

(54) **DISPOSITIF D'AMENAGEMENT D'UN VEHICULE**
MONTAGEVORRICHTUNG FÜR EIN FAHRZEUG
FITTING DEVICE FOR A VEHICLE

(30) Priorité: 15.06.2010 EP 10165953
(43) Date de publication de la demande: 24.04.2013
(73) Titulaire: misC sport & loisir sàrl, 1868 Collombey (CH)
(72) Inventeur: PERAKIS, Philippe, 1854 Leysin (CH)
(74) Mandataire: Leman Consulting S.A.
(86) Numéro de dépôt international: PCT/EP2011/059833
(87) Numéro de publication internationale: WO 2011/157703

(56) Documents cités:
- EP-A1- 2 193 958
- DE-A1- 3 531 394
- DE-A1-102008 034 218
- US-A- 2 953 287
- US-A- 3 406 999
- US-A- 4 197 600
- US-A- 4 826 235
- US-A1- 2006 191 449

## Description

### DOMAINE TECHNIQUE

La présente invention concerne un dispositif destiné à permettre l'aménagement d'un véhicule. Plus précisément, ce dispositif permet d'aménager en camping-car tout type de véhicule et en particulier des véhicules de tourisme.

### TECHNIQUE ANTERIEURE

Les véhicules que l'on peut trouver actuellement sur le marché peuvent être classés essentiellement en trois catégories, à savoir les véhicules de tourisme qui regroupent les voitures citadines, compactes et familiales, les véhicules dits monospace ou ludospace, également nommés MPV (multi-purpose vehicle; véhicules multi-usage) et les véhicules habitables tels que camping-car ou caravanes.

Les véhicules habitables ont l'avantage d'être étudiés pour pouvoir facilement permettre à leurs utilisateurs de dormir, de faire la cuisine ou toute autre activité qui nécessite un espace relativement grand. Par contre, ils ont l'inconvénient d'être volumineux, ce qui implique une conduite qui peut être parfois difficile ou peu agréable, mais surtout des problèmes de parcage, de manoeuvrabilité, de hauteur en cas d'obstacle tel qu'un pont, un tunnel, un parking souterrain, ... De plus, le prix d'achat est relativement élevé et le coût à l'utilisation également. En outre, ce type de véhicule n'est pas adapté pour un usage quotidien.

Les véhicules de type minivan, monospace, "ludospace", petits ou grands MPV présentent un encombrement plus faible et peuvent donc être utilisés de façon quotidienne. Certains d'entre eux sont proposés avec un aménagement intérieur qui permet une utilisation similaire à un camping-car c'est-à-dire qu'il est possible de dormir et éventuellement de manger à l'intérieur du véhicule. La majorité des véhicules ainsi aménagés sont relativement coûteux à la base et nécessitent un aménagement sur mesure, également coûteux. Pour une majorité d'utilisateurs, la plus grande partie des trajets se fait sans nécessiter un aménagement particulier. L'utilisation sous forme aménagée en camping car représente pour cette majorité d'utilisateurs une utilisation très ponctuelle. L'investissement n'est donc pas raisonnable.

Suite à ce constat, certaines entreprises ont proposé des meubles amovibles introduits dans un véhicule et qui permettent de transformer aisément ce véhicule en camping-car. L'un de ces meubles est décrit dans le brevet EP 0 229 556. Ce document décrit un meuble à tiroirs comportant des éléments qui peuvent être sortis du véhicule de façon à former une table ou rentrés dans le véhicule en position de rangement. Dans cette position de rangement, la partie supérieure du meuble forme un plan de couchage.

Le problème de tous les dispositifs connus permettant d'aménager un véhicule en camping-car est le fait que le véhicule doit avoir une hauteur relativement grande pour permettre de placer une couchette au-dessus du meuble tout en rendant cette couchette utilisable.

Les systèmes existants sont donc exclusivement réservés à des véhicules hauts. Etant donné que ce genre de véhicules ne représente qu'un faible pourcentage des véhicules commercialisés, les systèmes amovibles existants représentent un usage très limité.

Le document US 4,826,235 décrit un dispositif ayant pour avantage de diminuer la hauteur nécessaire dans un véhicule. Ce document concerne plus particulièrement une remorque destinée à contenir deux lits formés chacun d'un sommier et d'un matelas. En position de stockage, cette remorque est pliée et les lits sont disposés l'un sur l'autre. En position d'utilisation, cette remorque est dépliée et les lits sont disposés côte à côte. De façon plus détaillée, l'invention décrite dans ce document concerne un mécanisme permettant de déplacer les lits de leur position de stockage à leur position d'utilisation. Le but de l'invention est de permettre un déplacement simple des lits entre ces deux positions.

Pour atteindre ce but, le sommier inférieur peut coulisser dans un rail. Le sommier supérieur est lié de façon pivotante à deux paires de bras parallèles,

Le document US 3406999 décrit un dispositif selon le préambule de la revendication 1.

ces bras étant eux-mêmes liés de façon pivotante au rail ou à une structure autre que le sommier inférieur.

Un problème de cette invention vient du fait que lorsque les deux lits sont déplacés, il faut que les bras soient suffisamment longs pour que les coins des sommiers ne se gênent pas et que le lit supérieur puisse passer depuis la position d'utilisation à la position de stockage et inversement. En utilisant uniquement des bras pivotant autour de deux points fixes, il n'est pas possible que les matelas soient en contact lorsqu'ils sont en position d'utilisation. Pour résoudre ce problème, la solution préconisée consiste à avoir un mouvement de pivotement du sommier supérieur qui soit indépendant du mouvement coulissant du sommier inférieur. Le mouvement coulissant du lit inférieur est possible grâce à des rails. De ce fait, aucun des lits n'est fixe par rapport à la remorque.

La présence de ces rails nécessite une place importante, ce qui implique que le dispositif ne peut pas être installé dans le coffre d'un véhicule tel qu'une voiture. Ce dispositif ne peut pas non plus être adapté pour une utilisation dans le coffre d'une voiture.

La présente invention se propose de pallier les inconvénients des systèmes existants en proposant un dispositif amovible permettant de transformer pratiquement n'importe quel véhicule en camping-car, même des véhicules ayant une faible hauteur, tels que des voitures de type citadine, compact ou break, connus sous l'appellation supermini, petites et grandes familiales.

### EXPOSE DE L'INVENTION

Le but de l'invention est atteint par un dispositif d'aménagement d'un véhicule, caractérisé en ce qu'il comporte au moins un caisson formé d'au moins deux compartiments, au moins l'un des compartiments étant fixe par rapport au véhicule et au moins l'un des compartiments étant mobile par rapport au compartiment fixe, en ce que le compartiment mobile est lié au compartiment fixe au moyen d'une fixation permettant un déplacement horizontal et vertical du compartiment mobile, cette fixation comportant au moins un bras pivotant autour d'un axe solidaire de l'un desdits compartiments fixe ou mobile, en ce que ledit au moins un bras comporte en outre un doigt de guidage agencé pour être guidé dans une rainure réalisée dans le compartiment mobile ou fixe qui n'est pas solidaire de l'axe du bras, et en ce que ledit compartiment mobile peut être placé au moins dans une première position dans laquelle il est disposé au-dessus du compartiment fixe et dans une deuxième position dans laquelle il est placé à côté du compartiment fixe de telle façon que le haut du compartiment fixe et du compartiment mobile forment une surface sensiblement plane.

Le dispositif selon la présente invention offre un volume de rangement important, en particulier aussi important que dans les dispositifs de l'art antérieur tels que par exemple celui décrit dans le document EP 0 229 556. Toutefois, contrairement aux dispositifs de l'art antérieur, le dispositif de l'invention peut être utilisé confortablement dans pratiquement n'importe quel véhicule, même dans des véhicules ayant une hauteur relativement faible.

Le dispositif de l'invention est également particulièrement intéressant du fait qu'il permet une très large gamme d'utilisation. Selon différentes variantes, il peut être utilisé pour former un plan de travail disposé à l'extérieur du véhicule, une table basse, une table plus grande permettant à plusieurs personnes de s'asseoir. Il peut également être utilisé pour former un lit pour permettre à deux personnes de dormir confortablement dans le véhicule.

Le volume du dispositif est suffisamment grand pour permettre l'installation d'un lavabo et d'un réservoir d'eau propre et d'eau usée, ainsi que des moyens pour chauffer cette eau tels qu'un chauffe-eau. Il est en outre possible d'équiper le dispositif avec un réchaud de cuisine et divers ustensiles tels que casseroles, couverts, etc.

A titre d'exemple, les dimensions totales d'un caisson peuvent être de 45 cm de profondeur, 45 cm de largeur, 30 cm de hauteur lorsque ces deux compartiments sont disposés côte à côte et de 60 cm de hauteur dans une position dans laquelle les deux compartiments sont placés l'un sur l'autre. Les dimensions totales d'un exemplaire du dispositif de l'invention formé de deux caissons disposés côte à côte dans un véhicule sont de 45 cm de profondeur, 90 cm de largeur, de 30 cm de hauteur lorsque ces deux compartiments sont disposés côte à côte et de 60 cm de hauteur dans une position dans laquelle les deux compartiments sont placés l'un sur l'autre.

Un autre avantage du dispositif de l'invention est qu'il peut être facilement transformé d'une configuration à une autre par une seule personne, sans aucun outillage. Les pièces sont en effet emboîtées les unes dans les autres et maintenues sous l'effet de leur propre poids.

Le dispositif dans son ensemble peut être mis en place et retiré du véhicule relativement facilement, même par une personne seule. Dans un premier temps, un socle est mis en place dans le coffre d'un véhicule et fixé au véhicule au moyen de sangles. Dans un deuxième temps, les caissons sont mis en place sur le socle et fixés à ce dernier. Le dispositif est généralement formé de deux caissons de sorte que la mise en place d'un caisson à la fois n'est pas très pénible.

Les dimensions du dispositif sont telles que les sièges arrières du véhicule sont utilisables lorsque le dispositif est dans une position de transport.

### DESCRIPTION SOMMAIRE DES DESSINS

La présente invention et ses avantages seront mieux compris en référence aux figures annexées et à la description détaillée d'un mode de réalisation particulier, dans lesquelles :
- la figure 1 est une vue de face du dispositif selon l'invention dans une première position;
- la figure 2 est une vue de dessus du dispositif de l'invention, dans la position de la figure 1 ;
- la figure 3 est une vue de profil du dispositif de l'invention dans une seconde position;
- la figure 4 est une vue de profil similaire à la figure 3, du dispositif tel qu'installé dans un véhicule;
- la figure 5 est une vue de profil du dispositif de l'invention dans une troisième position;
- la figure 6 est une vue de profil similaire à la figure 5, du dispositif tel qu'installé dans un véhicule;
- la figure 7 est une vue de dessus du dispositif tel qu'illustré par les figures 5 et 6;
- les figures 8a à 8g sont des vues de côté du dispositif de l'invention dans différentes positions de déplacement d'un élément par rapport à un autre;
- les figures 9a à 9g sont des vues schématiques de côté similaires aux figures 8a à 8g, représentant une variante du dispositif de l'invention;
- les figures 10a à 10e sont des vues schématiques de côté similaires à celle des figures 8a à 8g, représentant une autre variante du dispositif de l'invention; et
- les figures 11 et 12 sont des vues de profil d'éléments formant un socle qui peut être utilisé avec le dispositif de l'invention.

### MANIERE DE REALISER L'INVENTION

En référence aux figures, le dispositif 10 selon la présente invention comporte essentiellement deux caissons 11 disposés côte à côte.

Dans un mode de réalisation avantageux, les caissons sont similaires, du moins en ce qui concerne leurs dimensions et leur aspect général. Ils peuvent toutefois être légèrement différents l'un de l'autre sur certains points, dépendant en particulier de leur aménagement spécifique.

Il est également possible de prévoir un caisson ayant une largeur supérieure à l'autre, par exemple respectivement 2/3 et 1/3 de la largeur totale, le caisson large pouvant par exemple être utilisé pour une personne seule et la combinaison du caisson large et du caisson étroit pouvant être utilisée pour deux personnes. Il est également possible de prévoir un dispositif ne comportant qu'un seul caisson.

Dans la description qui suit, un seul des caissons est décrit, étant entendu que l'autre caisson est similaire. Un caisson selon l'invention comprend deux compartiments 12 dont l'un (12a) est fixe par rapport à un véhicule dans lequel le dispositif est installé. Plus précisément, le dispositif est généralement placé dans le coffre du véhicule et fixé au plancher de ce coffre. L'autre compartiment 12b est mobile par rapport au compartiment fixe et peut être placé au-dessus du compartiment fixe et au moins dans une position dans laquelle il est disposé à côté du compartiment fixe.

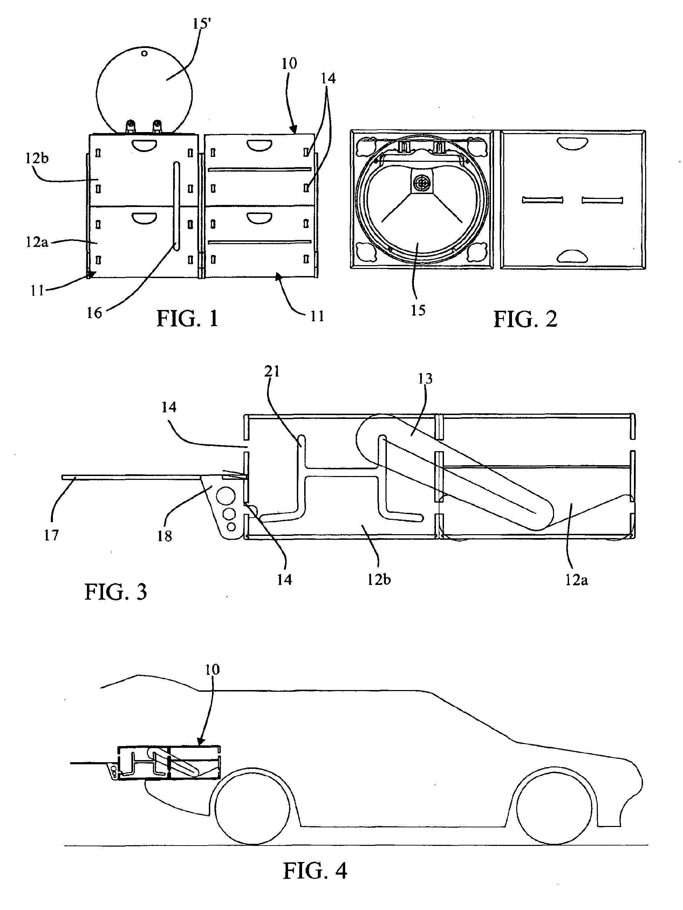

Les figures 1 et 2 illustrent le dispositif de l'invention dans une position dite de transport, selon une vue de face et de dessus respectivement.

Dans cette position de transport, le compartiment mobile 12b est placé verticalement sur le compartiment fixe 12a. Ces deux compartiments sont maintenus l'un sur l'autre au moyen d'une fixation permettant le déplacement horizontal et vertical du compartiment mobile. Selon un mode de réalisation préféré, les moyens de fixation comportent des bras 13 qui sont décrits plus en détails ci-dessous. Chaque compartiment comporte des ouvertures 14 agencées pour recevoir des éléments d'agencement supplémentaires, également décrits plus en détails plus bas.

Dans le mode de réalisation illustré par les figures 1 et 2, le compartiment mobile 12b situé à gauche reçoit un lavabo 15. Il est équipé d'un couvercle 15' de telle façon qu'il forme un plan lorsque le couvercle est fermé. Le compartiment fixe 12a est prévu pour recevoir un réservoir d'eau propre et un réservoir d'eau usée, une pompe et éventuellement des moyens permettant de chauffer cette eau. Les deux compartiments comportent un passage 16 qui s'étend dans la partie supérieure du compartiment fixe et dans la partie inférieure du compartiment mobile. Ce passage dépasse le milieu de la hauteur des compartiments de telle sorte qu'un tube puisse communiquer entre les deux compartiments quelle que soit leur position respective. Ce tube peut être utilisé pour le passage de l'eau du réservoir au lavabo. Il peut également être utilisé pour un câble électrique par exemple.

Le caisson disposé à droite sur le dessin peut recevoir par exemple du matériel de cuisine, un réchaud ou tout autre équipement adéquat.

Selon un mode de réalisation préféré, le compartiment mobile 12b peut se déplacer vers l'avant et vers l'arrière par rapport au compartiment fixe. Lorsque le compartiment mobile est déplacé vers l'arrière par rapport au véhicule, il sort du coffre du véhicule et peut être positionné de façon à former une surface plane avec le compartiment fixe. Ceci est illustré en particulier par les figures 3 et 4. Dans la figure 3, les deux compartiments sont posés de façon à former une surface plane à l'extérieur d'un véhicule. Le compartiment mobile est utilisé pour fixer et maintenir un plateau 17 faisant office de plan de travail ou de table basse. Ce plateau est fixé contre le compartiment mobile au moyen d'équerres 18 qui se logent dans l'une des ouvertures 14 ménagées dans l'une des faces du compartiment. Ce système de fixation permet un maintien sûr sans nécessiter de vis ou d'autres éléments de fixation requérant un outillage. De cette façon, la mise en place du plateau ou son remplacement par un autre élément est extrêmement simple et peut être fait sans habileté ni force particulière.

La figure 4 représente le dispositif de l'invention dans la configuration de la figure 3, tel qu'il est installé dans le coffre d'un véhicule. Dans cette figure, les deux compartiments sont représentés à des hauteurs semblables. Il est toutefois également possible d'utiliser ces deux compartiments même s'il existe une différence de niveau entre eux. Cette différence de niveau peut provenir de la configuration du coffre du véhicule ou du choix de l'utilisateur de maintenir les compartiments à des hauteurs différentes.

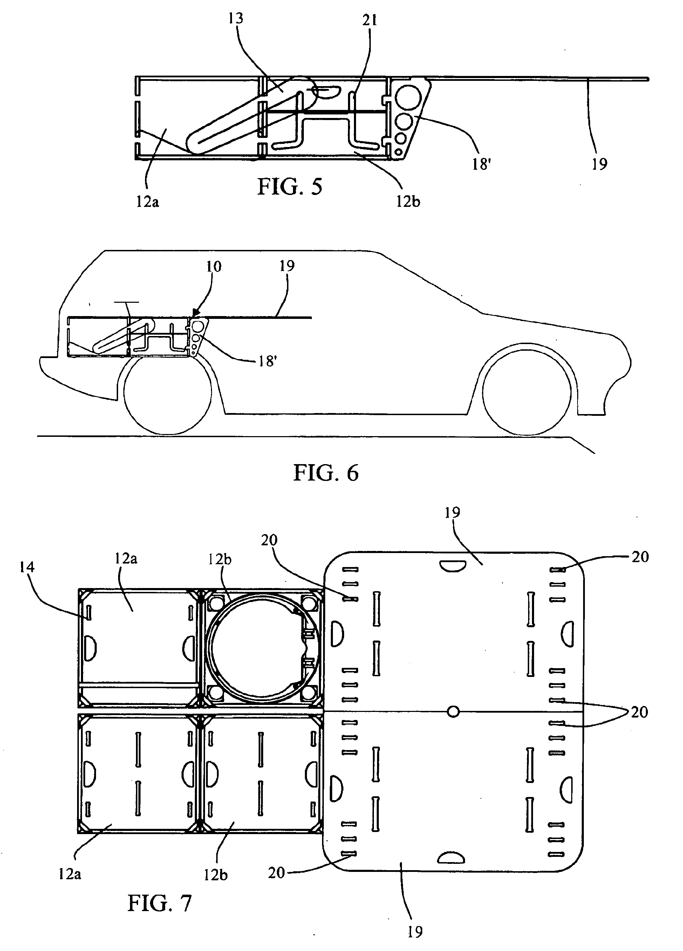

Lorsque le compartiment mobile 12b est déplacé vers l'avant, il entre dans le véhicule et peut être positionné de façon à former une surface plane avec le compartiment fixe. Ceci est illustré par les figures 5, 6 et 7. Dans ces figures, un plateau 19 est fixé au même niveau que la surface plane formée par les deux compartiments. Ce plateau s'étend en direction de l'avant du véhicule de telle sorte que l'ensemble forme une surface plane qui peut être utilisée comme lit.

Selon une variante préférée, les plateaux de lit 19 comporte des ouvertures 20 disposées à proximité des bords. Les ouvertures situées près de l'un des bords sont utilisées pour recevoir des équerres 18' destinées à maintenir le plateau contre le compartiment mobile. Les ouvertures disposées à proximité du bord opposé reçoivent des sangles qui sont accrochées aux sièges avant du véhicule, par exemple autour des appuie-tête, de façon à empêcher les plateaux de basculer vers le bas sous le poids de l'utilisateur.

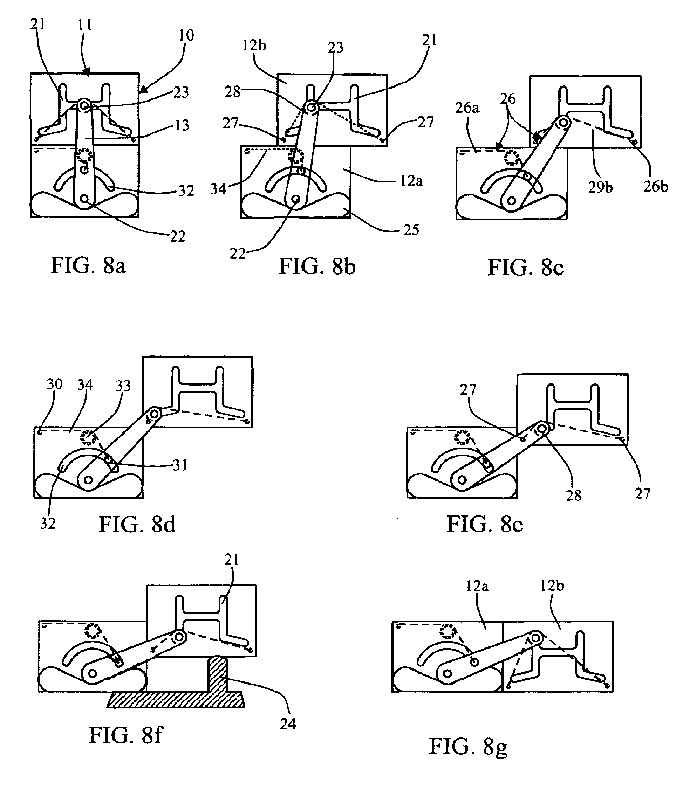

Les figures 8a à 8g, 9a à 9g et 10a à 10e illustrent trois variantes de réalisations permettant de déplacer le compartiment mobile 12b par rapport au compartiment fixe 12a.

La figure 8a illustre les deux compartiments vus de côté, en position de transport, c'est-à-dire que les deux compartiments sont posés verticalement l'un sur l'autre. Il est à noter que, pour des raisons de facilité d'utilisation, les côtés sont symétriques de sorte que le côté non visible des compartiments est symétrique par rapport au côté illustré par les figures.

Le compartiment mobile 12b comporte une rainure 21. Le bras 13 pivote autour d'un axe 22 solidaire du compartiment fixe 12a. Le bras est pourvu, dans une zone proche de son extrémité supérieure, d'un doigt de guidage 23 qui se déplace dans la rainure 21.

La rainure étant symétrique et centrée par rapport au côté du compartiment mobile, ce compartiment peut se déplacer indifféremment vers l'avant ou vers l'arrière.

La figure 8b illustre le déplacement horizontal du compartiment mobile 12b dans une première direction. Comme on peut le constater, le doigt 23 se déplace dans la rainure 21, dans la partie horizontale de cette rainure. Lorsque le compartiment mobile 12b se déplace encore plus dans cette direction, le doigt 23 se déplace dans la partie verticale de la rainure. Ceci est représenté par la figure 8c. Du fait de la forme particulière de cette rainure, le compartiment mobile 12b peut rester en appui contre le compartiment fixe 12a. Le compartiment mobile n'a pas besoin d'être maintenu par l'utilisateur ou part un support pour conserver sa position. En effet, la combinaison de l'appui contre le compartiment fixe et de la forme de la rainure permettent d'obtenir cette caractéristique. Lorsque l'arrête du compartiment mobile arrive en contact avec l'arrête du compartiment fixe, le doigt de guidage 23 se trouve dans une position extrême de la rainure, cette position permettant de faire la transition entre le mouvement horizontal du compartiment mobile et son déplacement vertical. Ceci est illustré par la figure 8d.

La figure 8e illustre le déplacement vertical du compartiment mobile 12b. Le doigt de guidage 23 remonte dans la rainure 21 et prend un chemin opposé. Dans la figure 8f, le compartiment mobile a été déplacé vers le bas. Dans cette figure, on a représenté schématiquement le bord d'un coffre de voiture 24 qui est légèrement surélevé par rapport au plancher du coffre. Le compartiment mobile 12b repose sur le bord du coffre. De par la forme particulière de la rainure 21, le compartiment mobile peut se mettre en appui sans risquer de pivoter dès que le doigt de guidage 23 se trouve dans la partie verticale de la rainure 21. Ainsi, le dispositif de l'invention est utilisable quelle que soit la hauteur du coffre, sans nécessiter un système particulier de fixation ou de maintien du compartiment mobile sur le compartiment fixe.

La figure 8g illustre le cas où les deux compartiments sont disposés au même niveau. Ceci peut être réalisé lorsque le compartiment mobile est déplacé vers l'extérieur ou vers l'intérieur du véhicule.

Le compartiment inférieur ou compartiment fixe 12a comporte un élément de retenue 25 qui empêche le bras 13 de se déplacer au-delà d'une limite prédéfinie. Cet élément de retenue permet notamment de limiter les contraintes sur les éléments, d'effectuer un blocage en fin de course (Fig. 8g) et d'empêcher le pivotement du compartiment mobile en position intermédiaire (Fig. 8f).

Comme on peut le constater d'après ces figures, le compartiment fixe ne se déplace jamais par rapport au véhicule. De plus, le compartiment mobile est liée uniquement au compartiment fixe, ce qui signifie que les bras relient le compartiment fixe au compartiment mobile, sans être liés à une autre structure indépendante du compartiment fixe. Malgré cette absence de liaison à une structure indépendante, il est possible de déplacer le compartiment mobile de façon à l'amener en contact soit avec la face supérieure du compartiment fixe, soit avec sa face avant ou arrière. Ceci est réalisé grâce à l'utilisation d'une rainure ayant des caractéristiques de forme particulières et à un doigt de guidage. Grâce à ceci, l'ensemble du dispositif de l'invention est particulièrement compact et peut être placé dans un espace restreint tel qu'un coffre de véhicule.

Sur les figures 8a à 8g sont également représentés des moyens 26 d'assistance au déplacement du compartiment mobile. Dans le mode de réalisation illustré, ces moyens d'assistance sont disposés dans le compartiment fixe et dans le compartiment mobile. Bien qu'ils ne soient pas indispensables, ils facilitent le déplacement du compartiment mobile et permettent une manipulation aisée. Il est possible également de ne prévoir des moyens d'assistance que dans le compartiment fixe 12a ou au contraire, que dans le compartiment mobile 12b.

Les moyens d'assistance 26b disposés dans le compartiment mobile 12b comportent deux points d'attache 27 et une poulie 28. Les points d'attache 27 sont disposés dans les angles inférieurs du compartiment, à l'intérieur de celui-ci. La poulie 28 est également placée à l'intérieur de ce compartiment mobile, sur le doigt de guidage 23 se déplaçant dans la rainure 21. Un câble élastique 29b relie les deux points d'attache 27 en passant sur la poulie28.

Comme on peut le constater d'après les figures 8a à 8d, plus le compartiment mobile est désaxé par rapport au compartiment fixe, plus le câble élastique 29b est court, ce qui signifie qu'il est moins tendu. Ainsi, le déplacement horizontal du compartiment mobile est simple et ne demande pas d'effort de la part de l'utilisateur.

D'après les figures 8e à 8g, on constate que le câble élastique 29b s'allonge au fur est à mesure que l'on abaisse le compartiment mobile. Cela signifie que ce câble élastique exerce une force vers le haut qui s'oppose à la force vers le bas due à la masse du compartiment. Ainsi, le mouvement vers le bas du compartiment mobile est retenu par le câble élastique 29b.

A l'inverse, lorsque le compartiment mobile 12b est déplacé vers le haut depuis une position telle que représentée par la figure 8g jusqu'à une position telle que représentée par la figure 8e, les moyens d'assistance 26 aident l'utilisateur à soulever le compartiment mobile.

Les moyens d'assistance disposés à l'intérieur du compartiment fixe 12a comportent un point d'attache 30 disposé dans un angle supérieur du compartiment et un autre point d'attache disposé sur un doigt 31 solidaire du bras 13. Afin de permettre le déplacement de ce doigt à travers la paroi du compartiment fixe, cette dernière comporte une ouverture 32 en forme d'arc de cercle. Cette ouverture peut être utilisée avec le doigt 31 comme élément de guidage.

Le compartiment fixe 12a comporte en outre, sur une de ses faces internes, une poulie 33. Un câble élastique 34 est fixé au point d'attache 30, passe sur la poulie 33 et est fixé au doigt 31. Comme dans le cas du câble élastique 29 placé dans le compartiment mobile 12b, le câble élastique 34 du compartiment fixe 12a assiste le déplacement du compartiment mobile et minimise le poids apparent, c'est-à-dire le poids ressenti par l'utilisateur.

Il est clair que d'autres moyens d'assistance pourraient être utilisés comme par exemple des ressorts, des vérins,... Il est également possible d'amortir la descente du compartiment mobile par exemple en agissant sur la friction entre le bras et le compartiment fixe.

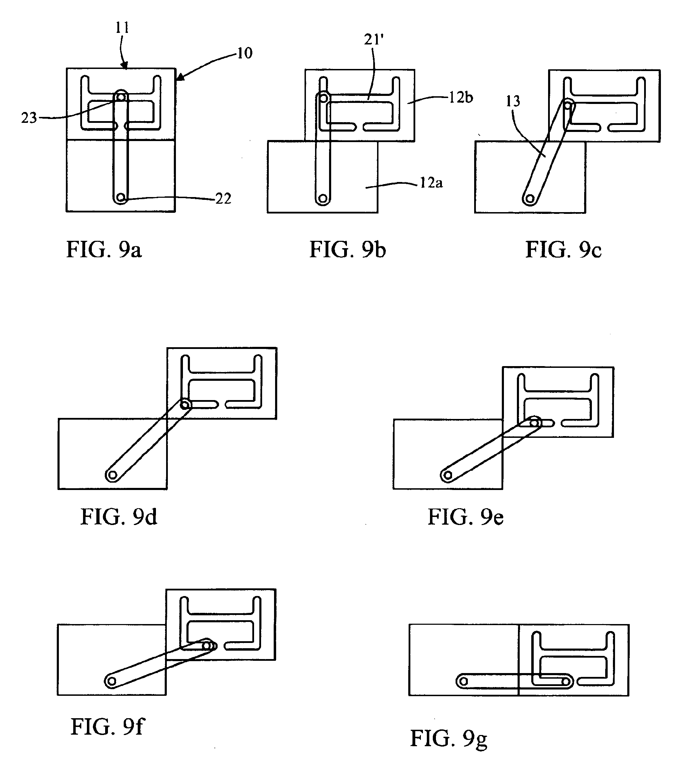

Les figures 9a à 9g illustrent une variante de la rainure 21' du compartiment mobile. Dans cette variante, le déplacement du compartiment mobile est similaire à celui expliqué en référence aux figures 8a à 8g. Dans cet exemple toutefois, le compartiment mobile ne peut pas être bloqué dans n'importe quelle position lors de son déplacement vertical le long du compartiment fixe. Cette variante est donc avantageusement utilisée lorsque les deux compartiments peuvent être placés au même niveau ou lorsque des moyens additionnels pour maintenir le compartiment mobile sont prévus.

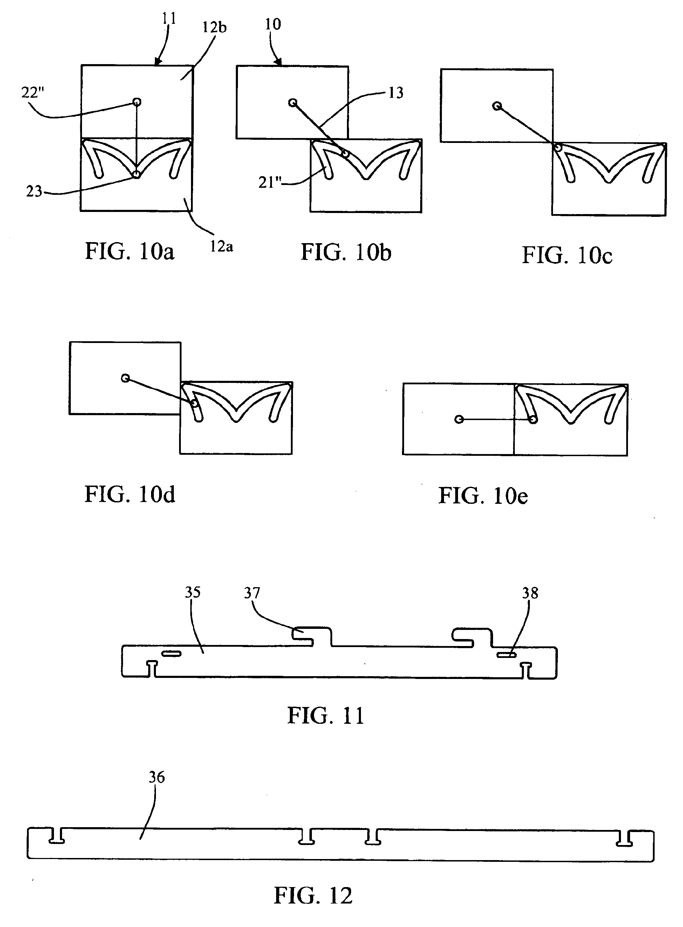

Dans le mode de réalisation illustré par les figures 10a à 10e, le bras 13 pivote autour d'un axe 22" solidaire du compartiment mobile alors que la rainure 21" est réalisée dans le compartiment fixe. Comme dans le mode de réalisation des figures 9, le compartiment mobile n'est pas autobloquant par rapport au compartiment fixe. Il est donc avantageux de prévoir des moyens de blocage ou de soutien, ou d'utiliser cette variante sur un support plan. D'autres formes de rainures peuvent également être utilisées, pour autant qu'elles permettent le déplacement du compartiment mobile depuis une position dans laquelle il est disposé verticalement sur le compartiment fixe jusqu'à une position dans laquelle il est placé horizontalement à côté du compartiment fixe.

Selon une réalisation avantageuse, les caissons selon la présente invention sont maintenus en place dans un coffre de voiture. Il existe bien entendu différentes manières de maintenir de tels caissons, notamment par fixation directe dans le plancher de la voiture, par une fixation par sangles ou par tout autre moyen connu. L'une des manières avantageuse consiste à placer le dispositif sur un socle. Les éléments formant ce socle sont représentés par les figures 11 et 12. Ce socle est formé d'un cadre comportant des traverses 35 et des éléments longitudinaux 36 qui s'emboîtent les uns dans les autres par exemple par un assemble de type "à mi-bois". Cet assemblage ne nécessite aucun élément de fixation tel que des vis. La hauteur du socle est déterminée en fonction du type de véhicule dans lequel le dispositif est installé, plus précisément en fonction de la profondeur du coffre. De cette manière, en changeant uniquement la hauteur du socle, il est possible d'adapter le dispositif à pratiquement n'importe quel véhicule et en particulier à des véhicules ayant des hauteurs de coffre très différentes les uns des autres.

Le socle peut en outre comporter des glissières ou des crochets 37 agencés pour coopérer avec les caissons et assurer un maintien efficace des caissons sur le socle. Certains éléments du socle comportent en outre au moins une fente 38 permettant de passer une sangle de façon à attacher le socle dans le coffre du véhicule.

Les caissons sont disposés côte à côte sur le support. De façon préférée, chaque caisson comporte des glissières ou un profil coopérant avec les glissières ou les crochets 37 du socle de façon à assurer un maintien efficace et sûr des caissons sur le socle. Ce maintien peut être rendu fixe au moyen d'une goupille par exemple qui empêche un caisson de se déplacer le long du support.

Les matériaux utilisés peuvent être soumis à des efforts relativement conséquents. Selon un mode de réalisation préféré, la matière utilisée est formée de panneaux stratifiés sous haute pression tels que par exemple des panneaux de papier kraft imprégné de résine phénolique, connus sous l'appellation " stratifié compact HPL" (High Pressure Laminate).

La présente invention a été décrite dans un mode de réalisation dans laquelle elle est utilisée pour recevoir du matériel de camping. Il est clair que d'autres utilisations peuvent être prévues. En particulier, toute utilisation pour une activité en plein air peut bénéficier du dispositif de l'invention. Ces activités peuvent concerner aussi bien des sports comme le cyclisme que des activités telles que la pêche,... Il est bien entendu possible d'utiliser ce dispositif pour d'autres fonctions, par exemple comme rangement de matériel professionnel (outillage,...) ou d'intervention (police, pompiers,...) ou d'autres usages similaires.

La présente invention a l'avantage d'être facilement installée ou retirée d'un véhicule en fonction de l'usage du véhicule. De plus, ce dispositif peut être installé dans pratiquement n'importe quel véhicule, quelle que soit sa taille. Un autre avantage est la possibilité de changer la configuration du dispositif de façon extrêmement simple, rapide, sans outillage et avec une seule personne.

## Revendications

1. Dispositif d'aménagement d'un véhicule, comportant
au moins un caisson (11) formé d'au moins deux compartiments (12a, 12b), au moins l'un des compartiments (12a) étant fixe par rapport au véhicule et au moins l'un des compartiments (12b) étant mobile par rapport au compartiment fixe, le compartiment mobile (12b) étant lié au compartiment fixe (12a) au moyen d'une fixation permettant un déplacement horizontal et vertical du compartiment mobile **caractérisé en ce que**, cette fixation comporte au moins un bras (13) pivotant autour d'un axe (22, 22', 22") solidaire de l'un desdits compartiments fixe ou mobile, **en ce que** ledit au moins un bras (13) comporte en outre un doigt de guidage (23) agencé pour être guidé dans une rainure (21, 21', 21 ") réalisée dans le compartiment mobile ou fixe qui n'est pas solidaire de l'axe du bras, et **en ce que** ledit compartiment mobile peut être placé au moins dans une première position dans laquelle il est disposé au-dessus du compartiment fixe et dans une deuxième position dans laquelle il est placé à côté du compartiment fixe de telle façon que le haut du compartiment fixe et du compartiment mobile forment une surface sensiblement plane.

2. Dispositif selon la revendication 1, **caractérisé en ce que** le compartiment mobile (12b) peut être disposé à côté du compartiment fixe (12a), dans une position arrière dans laquelle le compartiment mobile est disposé vers l'arrière du véhicule par rapport au compartiment fixe et dans une position avant dans laquelle le compartiment mobile est disposé vers l'avant du véhicule par rapport au compartiment fixe.

3. Dispositif selon l'une quelconque des revendications précédentes, **caractérisé en ce qu'**il comporte deux caissons (11) disposés côte à côte.

4. Dispositif selon la revendication 1, **caractérisé en ce que** ladite rainure (21) est réalisée dans le compartiment mobile (12b) et **en ce qu'**elle est sensiblement en forme de H, les extrémités inférieures de la rainure en forme de H étant prolongées par des segments de rainure dirigées à l'opposé du milieu de la rainure en forme de H.

5. Dispositif selon l'une quelconque des revendications précédentes, **caractérisé en ce que** le compartiment mobile (12b) est relié au compartiment fixe (12a) par deux bras (13) disposés de part et d'autre de ces compartiments.

6. Dispositif selon l'une quelconque des revendications précédentes, **caractérisé en ce qu'**il comporte des moyens d'assistance au déplacement (26) agencés pour assister le déplacement du compartiment mobile (12b).

7. Dispositif selon la revendication 6, **caractérisé en ce que** les moyens d'assistance au déplacement (26) comportent au moins un câble élastique (29b, 34).

8. Dispositif selon l'une quelconque des revendications précédentes, **caractérisé en ce que** le compartiment fixe (12a) et le compartiment mobile (12b) comportent un passage (16) permettant le passage d'un tube d'un compartiment à l'autre, quelle que soit la position du compartiment mobile par rapport au compartiment fixe.

9. Dispositif selon l'une quelconque des revendications précédentes, **caractérisé en ce que** le caisson (11) comporte des ouvertures (14) destinées à recevoir des éléments d'agencement.

10. Dispositif selon la revendication 9, **caractérisé en ce que** les éléments d'agencement forment au moins l'un des éléments parmi une table, un plan de travail ou un lit.

11. Dispositif selon l'une quelconque des revendications précédentes, **caractérisé en ce que** ledit au moins un caisson (11) est fixé sur un socle.

## Patentansprüche

1. Anordnungsvorrichtung für ein Fahrzeug, mit mindestens einem Kasten (11) bestehend aus mindestens zwei Teilen (12a; 12b), wobei mindestens eines der Teile (12a) fest im Verhältnis zum Fahrzeug ist und mindestens eines der Teile (12b) beweglich im Verhältnis zum festen Teil ist, wobei das bewegliche Teil (12b) mit dem festen Teil (12a) mittels einer Befestigung verbunden ist, wodurch eine waagrechte und senkrechte Bewegung des beweglichen Teils möglich wird, **gekennzeichnet dadurch, dass** diese Befestigung mindestens einen Arm (13) aufweist, der um eine Achse (22,22'; 22") rotiert, die einstückig mit einem der genannten festen oder beweglichen Teile ist, dadurch, dass besagter mindestens eine Arm (13) außerdem einen Führungsfinger (23) aufweist, der angeordnet ist, um in einer Nut (21,21'; 21") in dem beweglichen oder festen Teil geführt zu werden, das nicht einstückig mit der Achse des Armes ist, sowie dadurch, dass besagtes bewegliche Teil mindestens in eine erste Position platziert werden kann, in welcher es oberhalb des festen Teils angeordnet ist, und in eine zweite Position, in welcher es neben dem festen Teil platziert ist, so dass das obere Teil des festen Teils und das des beweglichen Teils eine im wesentlichen ebene Oberfläche bilden.

2. Vorrichtung nach Anspruch 1, **gekennzeichnet dadurch dass** das bewegliche Teil (12b) neben dem festen Teil (12a) in einer hinteren Position angeordnet sein kann, in der das bewegliche Teil zum hinteren Teil des Fahrzeugs im Verhältnis zum festen Teil hin angeordnet ist, und in einer vorderen Position, in der das bewegliche Teil zum Vorderteil des Fahrzeugs hin im Verhältnis zum festen Teil angeordnet ist.

3. Vorrichtung nach einem beliebigen der vorherigen Ansprüche, **gekennzeichnet dadurch, dass** sie zwei nebeneinander angeordnete Kästen (11) umfasst.

4. Vorrichtung nach Anspruch 1, **gekennzeichnet dadurch, dass** besagte Nut (21) in dem beweglichen Teil (12b) liegt, und dadurch, dass sie im wesentlichen H-förmig ist, wobei die unteren Enden der H-förmigen Nut durch Nutsegmente verlängert sind, die entgegen der Mitte der H-förmigen Nut ausgerichtet sind.

5. Vorrichtung nach einem beliebigen der vorherigen Ansprüche, **gekennzeichnet dadurch, dass** das bewegliche Teil (12b) mit dem festen Teil (12a) durch zwei Arme (13) verbunden ist, die an beiden Seiten dieser Teile angeordnet sind.

6. Vorrichtung nach einem beliebigen der vorherigen Ansprüche, **gekennzeichnet dadurch, dass** sie Bewegungshilfsmittel (26) umfasst, die die Bewegung des beweglichen Teils (12b) unterstützen.

7. Vorrichtung nach Anspruch 6, **gekennzeichnet dadurch, dass** die Bewegungshilfsmittel (26) mindestens ein elastisches Kabel (29b, 34) umfassen.

8. Vorrichtung nach einem beliebigen der vorherigen Ansprüche, **gekennzeichnet dadurch, dass** das feste Teil (12a) und das bewegliche Teil (12b) einen Durchgang (16) umfassen, wodurch der Übergang eines Rohrs von einem Teil zum anderen möglich wird, in jeder beliebigen Position des beweglichen Teils im Verhältnis zum festen Teil.

9. Vorrichtung nach einem beliebigen der vorherigen Ansprüche, **gekennzeichnet dadurch, dass** der Kasten (11) Öffnungen (14) umfasst, um Ausstattungselemente aufzunehmen.

10. **Vorrichtung nach Anspruch 9, gekennzeichnet dadurch, dass die** Ausstattungselemente mindestens eines der folgenden Elemente bilden: einen Tisch, eine Arbeitsplatte oder ein Bett.

11. Vorrichtung nach einem beliebigen der vorherigen Ansprüche, **gekennzeichnet dadurch, dass** besagter mindestens eine Kasten (11) auf einem Sockel befestigt ist.

## Claims

1. Fittings device for a vehicle, comprising at least one box (11) formed by at least two compartments (12a, 12b), at least one of the compartments (12a) being fixed relative to the vehicle and at least one of the compartments (12b) being mobile relative to the fixed compartment, the mobile compartment (12b) being connected to the fixed compartment (12a) by a fastening mechanism that allows a horizontal and vertical displacement of the mobile compartment, **characterized in that** such fastening mechanism comprises at least one arm (13) pivotable around an axis (22, 22', 22") connected to one of said fixed or mobile compartments, **in that** said at least one arm (13) further comprises a guiding finger (23) arranged for being guided in a groove (21, 21', 21 ") made in the mobile or fixed compartment which is not connected to the axis of the arm, and **in that** said mobile compartment is placeable at least in a first position in which it is arranged above the fixed compartment and in a second position in which it is placed near the fixed compartment in such a way that upper parts of the fixed compartment and of the mobile compartment form a substantially flat surface.

2. Device according to claim 1, **characterized in that** the mobile compartment (12b) can be arranged near the fixed compartment (12a), in a rear position in which the mobile compartment is arranged towards the back of the vehicle relative to the fixed compartment and in a front position in which the mobile compartment is arranged towards the front of the vehicle relative to the fixed compartment.

3. Device according to any of the preceding claims, **characterized in that** it comprises two boxes (11) arranged side by side.

4. Device according to claim 1, **characterized in that** said groove (21) is made in the mobile compartment (12b) and **in that** it is essentially H-shaped, the lower ends of the H-shaped groove being extended by groove segments directed opposite to the center of the H-shaped groove.

5. Device according to any of the preceding claims, **characterized in that** the mobile compartment (12b) is connected to the fixed compartment (12a) by two arms (13) arranged on opposite sides of these compartments.

6. Device according to any of the preceding claims, **characterized in that** it comprises displacement assisting means (26) arranged to assist the displacement of the mobile compartment (12b).

7. Device according to claim 6, **characterized in that** the displacement assisting means (26) comprise at least a stretch cord (29b, 34).

8. Device according to any of the preceding claims, **characterized in that** the fixed compartment (12a) and the mobile compartment (12b) comprise a passage (16) intended to allow the passage of a tube from one compartment to the other, regardless of the position of the mobile compartment compared to the fixed compartment.

9. Device according to any of the preceding claims, **characterized in that** the box (11) comprises openings (14) configured to receive furnishing elements.

10. Device according to claim 9, **characterized in that** the furnishing elements form at least one of the elements comprising a table, a work surface or a bed.

11. Device according to any of the preceding claims, **characterized in that** said at least one box (11) is fixed on a base.
